# EUROPÄISCHE PATENTSCHRIFT

(11) **EP 1 518 154 B1**
(45) Veröffentlichungstag und Bekanntmachung des Hinweises auf die Patenterteilung: **27.02.2008**
(21) Anmeldenummer: 03762448.3
(22) Anmeldetag: 03.07.2003
(51) Int. Cl.: G05B 19/418

(54) **VERFAHREN ZUR AUSWAHL UND/ODER FERTIGUNG VON AUTOMATISIERUNGSHARDWARE**
METHOD FOR SELECTING AND/OR PRODUCING AUTOMATION HARDWARE
PROCEDE POUR SELECTIONNER ET/OU FABRIQUER DU MATERIEL D'AUTOMATISATION

(30) Priorität: 03.07.2002 DE 10229869
(43) Veröffentlichungstag der Anmeldung: 30.03.2005
(73) Patentinhaber: SIEMENS AKTIENGESELLSCHAFT, 80333 München (DE)
(72) Erfinder: HÖFLER, Werner, 90542 Eckental (DE); BECKER, Norbert, 91058 Erlangen (DE)
(86) Internationale Anmeldenummer: PCT/DE2003/002225
(87) Internationale Veröffentlichungsnummer: WO 2004/006032

(56) Entgegenhaltungen:
- WO-A-96/16361
- US-A- 4 885 694
- GERSTNER T ET AL: "RATIONELLES PROJEKTIEREN VON AUTOMATISIERUNGSSYSTEMEN RATIONAL PLANNING OF AUTOMATION SYSTEMS" AUTOMATISIERUNGSTECHNISCHE PRAXIS - ATP, OLDENBOURG VERLAG. MUNCHEN, DE, Bd. 36, Nr. 12, 1. Dezember 1994 (1994-12-01), Seiten 42-45, XP000483710 ISSN: 0178-2320

## Beschreibung

Die Erfindung betrifft ein Verfahren zur Auswahl und/oder Fertigung von Automatisierungshardware. Insbesondere betrifft die Erfindung ein Verfahren, das automatisch die Auswahl geeigneter, also für einen jeweils zu steuernden und/oder zu überwachenden technischen Prozess passender Automatisierungshardware unterstützt.

Unter dem Oberbegriff Automatisierungshardware wird dabei und im Folgenden jegliche zur Steuerung und/oder Überwachung eines technischen Prozesses geeignete Hardware, wie z. B. intelligente Steuerungsgeräte, nämlich Prozessrechner, speicherprogrammierbare Steuerungen oder dezentrale Peripheriegeräte, etc., sowie Ein- und/oder Ausgabebaugruppen für solche Rechner, Steuerungen oder Peripheriegeräte in einer Ausführung zum Anschluss digitaler oder analoger Ein- oder Ausgänge des technischen Prozesses, zusammengefasst. Zur Automatisierungshardware gehören ferner auch Mittel zur kommunikativen Verbindung der oben genannten Geräte untereinander, wie Busanschaltungen, Busverbindungen und dergleichen. Ferner gehören zur Automatisierungshardware auch Funktionseinheiten, wie z. B. Regler, Motoransteuerungen, wie z. B. Frequenzumrichter, Drehzahlwächter und Grenzwertmelder, etc. Schließlich gehört zur Automatisierungshardware auch noch die unmittelbare Prozessperipherie, nämlich Geräte, wie Schalter, Taster, Endschalter (mechanisch, induktiv, kapazitiv), Lichtschranken und dergleichen, die zur Aufnahme von Zuständen des jeweils gesteuerten und/oder überwachten technischen Prozesses, und solche Geräte, wie Ventile, Motoren, Leuchtmittel und dergleichen, die zur Beeinflussung des technischen Prozesses vorgesehen und geeignet sind. Die Gesamtheit nicht nur der vorstehend exemplarisch aufgezählten Geräte sondern auch funktionsäquivalenter anderer Geräte oder sonst im Umfeld der Automatisierung technischer Prozesse bekannter Geräte wird zusammenfassend als Automatisierungshardware bezeichnet.

Einzelne Geräte aus diesem Spektrum, wie z. B. eine speicherprogrammierbare Steuerung oder ein dezentrales Peripheriegerät aber auch ein Sensor oder ein Aktor, wie ein Schalter oder ein Motor, werden im Folgenden als Automatisierungskomponente oder Automatisierungsgerät bezeichnet.

Die Auswahl von Automatisierungshardware erfolgt heute manuell, wobei auf die Erfahrung und die Kenntnis der jeweils mit solchen Aufgaben betrauten Fachleute zurückgegriffen wird. Solche Fachleute kennen üblicherweise, z. B. aus zurückliegenden Automatisierungsvorhaben und daraus resultierenden Automatisierungslösungen, also dem Einsatz einer konkreten Automatisierungshardware zur Steuerung und/oder Überwachung eines konkreten technischen Prozesses unter Kontrolle einer spezifischen Steuerungssoftware, das Produktspektrum einzelner Anbieter von Automatisierungshardware. Anhand dieses Wissens über einzelne Automatisierungskomponenten werden solche Komponenten ausgewählt, die der jeweilige Bearbeiter für geeignet hält. Eine solche Lösung ist beispielsweise aus der US 4,885,694 bekannt, die eine Software zur Erstellung einer Steuerung im Bereich der Gebäudeleittechnik betrifft.

Nachteilig bei diesem bekannten Vorgehen ist jedoch, dass die Kenntnis des jeweiligen Bearbeiters über die Gesamtheit der zur Verfügung stehenden Automatisierungshardware notwendig beschränkt ist. Die Entscheidung für oder gegen eine bestimmte Automatisierungskomponente ist möglicherweise stärker davon beeinflusst, ob der Bearbeiter diese Komponente kennt, als von sachlich-technischen Überlegungen, wie etwa die optimale Eignung für die jeweilige Automatisierungsaufgabe oder Automatisierungsteilaufgabe. Des Weiteren kann selbst umfassendes Fachwissen des jeweiligen Bearbeiters niemals zur Gänze eventuelle Abhängigkeiten einzelner Automatisierungskomponenten untereinander berücksichtigen. Selbst wenn besondere Detailkenntnisse über das Lieferspektrum einer Vielzahl von Anbietern im Bereich der Automatisierungshardware einem Bearbeiter die Auswahl optimaler Komponenten eines ersten Anbieters für eine erste Automatisierungsteilaufgabe und optimaler Komponenten eines zweiten Anbieters für eine zweite Automatisierungsteilaufgabe ermöglichen, kann sich ein erhebliches Problem aus der gemeinsamen Verwendung von Automatisierungskomponenten zweier verschiedener Anbieter ergeben, weil diese etwa nicht miteinander kompatibel sind und das Vorsehen geeigneter Schnittstellen einen unverhältnismäßig hohen Mehraufwand bedingt.

Der Erfindung liegt daher die Aufgabe zugrunde, ein Verfahren anzugeben, mit dem die oben aufgezeigten Nachteile vermieden werden können.

Diese Aufgabe wird erfindungsgemäß mit einem Verfahren mit den Merkmalen des Anspruchs 1 gelöst. Dazu sind bei dem Verfahren zur Auswahl und/oder Fertigung von Automatisierungshardware, wie sie zur Steuerung und/oder Überwachung eines zu automatisierenden technischen Prozesses entsprechend einer Automatisierungslösung geeignet oder erforderlich ist, die folgenden Schritte vorgesehen:
a) es wird eine elektronisch lesbare Beschreibung der Automatisierungslösung erstellt, wobei die Beschreibung der Automatisierungslösung eine technologische Beschreibung wie eine Konstruktionszeichnung ist, die zumindest Teile des technischen Prozesses und diesen jeweils zugeordnet Komponenten der auszuwählenden und/oder zu fertigenden Automatisierungshardware umfasst,
b) die Beschreibung wird mittels eines computergestützten Analysewerkzeugs analysiert,
c) das Analysewerkzeug initiiert zu einzelnen Elementen der Beschreibung einen Dialog mit einem Benutzer - Benutzerdialog - zur Spezifikation einzelner Komponenten der Automatisierungshardware, wobei der Benutzerdialog eine Eingabe von spezifizierenden Parametern zu einzelnen Komponenten der Automatisierungshardware umfasst und wobei der oder jeder Benutzerdialog eine Anzahl passender Komponenten der Automatisierungshardware zur Auswahl durch den Benutzer umfasst,
d) entsprechend der Analyse der Beschreibung wird die jeweilige Automatisierungshardware ausgewählt und/oder gefertigt,
e) für den oder jeden Benutzerdialog werden die jeweils zur Auswahl vorgesehenen passenden Komponenten anhand der zugehörigen Teile des technischen Prozesses ermittelt.

Jede Beschreibung der Automatisierungslösung geht üblicherweise von einer Beschreibung des zu automatisierenden technischen Prozesses aus. Eine Form der Beschreibung der Automatisierungslösung umfasst z. B. eine Konstruktionszeichnung zum technischen Prozess, die ggf. um Informationen zu Aktoren und Sensoren zur Beeinflussung des Prozesses und zur Ermittlung von Zuständen des Prozesses ergänzt ist. Für unterschiedliche Abstraktionsniveaus der Beschreibung, z. B. einerseits in Bezug auf den gesamten Prozess und andererseits in Bezug auf einzelne Teilprozesse, können jeweils eigene Beschreibungen der Automatisierungslösung erstellt und analysiert werden. Die Beschreibung der Automatisierungslösung in Form einer Konstruktionszeichnung umfasst zumindest Teile des technischen Prozesses und diesen jeweils zugeordnet Komponenten der auszuwählenden und/oder zu fertigenden Automatisierungshardware, z. B. in Form von "Platzhaltern" für Aktoren, nämlich Motoren, Ventile, etc., und Sensoren, nämlich digitale oder analoge Messwertaufnehmer, etc. Mittels des Benutzerdialogs kann der jeweilige Anwender des Verfahrens geeignete Komponenten zum Auffüllen der Platzhalter auswählen, z. B. einen Motor zum Antrieb einer beweglichen Komponente im technischen Prozess oder ein Ventil zum gesteuerten Öffnen oder Schließen von Reaktoren einer verfahrenstechnischen Einrichtung.

Die Erfindung geht von der Erkenntnis aus, dass jede Beschreibung der Automatisierungslösung - ggf. unter Hinzuziehung der Automatisierungsaufgabe - die wesentlichen Informationen zur Spezifikation der jeweils benötigten Automatisierungshardware zumindest implizit umfasst. Ausgehend von diesen Spezifikationen kann die Automatisierungshardware individuell ausgewählt und ggf. hergestellt werden. Damit ergibt sich eine Analogie beispielsweise zum Kauf eines neuen Personenwagens, wo die Anforderungen des Interessenten an den zu erwerbenden Personenwagen in Verbindung mit der individuellen finanziellen Beweglichkeit bereits auch eine Spezifikation des zu erwerbenden Personenwagens zumindest implizit umfasst. Der jeweilige Interessent weiß demnach, zu welchem Zweck er den neu zu erwerbenden Personenwagen einsetzen möchte. Wenn der Personenwagen z. B. als Fahrzeug für eine Familie mit zwei Kindern vorgesehen ist, ergeben sich aus den damit einhergehenden Bedürfnissen nach einem entsprechenden Sitzplatz- und Raumangebot die Spezifikationen für das zu erwerbende Fahrzeug. Anhand dieser Spezifikationen kann entschieden werden, ob ein Cabrio, ein Coupe, eine Limousine oder ein Kombiwagen erworben wird, usw.

Der oder jeder Benutzerdialog umfasst eine Anzahl passender Komponenten der Automatisierungshardware zur Auswahl durch den Benutzer, wodurch bereits automatisch eine erste Vorauswahl geeigneter Komponenten getroffen wird, aus denen der Benutzer dann jeweils eine Komponente konkret auswählt. Eine solche automatische Vorauswahl erfolgt z. B. anhand der Beschreibung der Automatisierungslösung, also z. B. anhand der Konstruktionszeichnung, oder anhand von bereits eingegebenen konkretisierenden Parametern. Wenn z. B. mit einem Parameter als Motor ein Gleichstrommotor ausgewählt wird, umfasst der Benutzerdialog nach dieser Auswahl entsprechend keine Wechselstrommotoren mehr, so dass durch jede Konkretisierung die Übersicht über die verbleibenden Komponenten erleichtert wird.

Der Vorteil dieser Lösung besteht darin, dass der Anwender des Verfahrens computerunterstützt genau diejenige Automatisierungshardware auswählt, die zur Lösung des Automatisierungsproblems und damit schließlich zur automatisierten Steuerung und/oder Überwachung des technischen Prozesses geeignet und erforderlich ist.

Diese Aufgabe wird erfindungsgemäß mit einem alternativen Verfahren mit den Merkmalen des Anspruchs 3 gelöst. Dazu sind bei dem Verfahren zur Auswahl und/oder Fertigung von Automatisierungshardware, wie sie zur Steuerung und/oder Überwachung eines zu automatisierenden technischen Prozesses entsprechend einer Automatisierungslösung geeignet oder erforderlich ist, die folgenden Schritte vorgesehen:
a) es wird eine elektronisch lesbare Beschreibung der Automatisierungslösung erstellt, wobei die Beschreibung der Automatisierungslösung eine technologische Beschreibung wie eine Konstruktionszeichnung ist, die zumindest Teile des technischen Prozesses und diesen jeweils zugeordnet Komponenten der auszuwählenden und/oder zu fertigenden Automatisierungshardware umfasst,
b) die Beschreibung wird mittels eines computergestützten Analysewerkzeugs analysiert,
c) das Analysewerkzeug initiiert zu einzelnen Elementen der Beschreibung einen Dialog mit einem Benutzer - Benutzerdialog - zur Spezifikation einzelner Komponenten der Automatisierungshardware, wobei der Benutzerdialog eine Eingabe von spezifizierenden Parametern zu einzelnen Komponenten der Automatisierungshardware umfasst und wobei der oder jeder Benutzerdialog eine Anzahl passender Komponenten der Automatisierungshardware zur Auswahl durch den Benutzer umfasst,
d) entsprechend der Analyse der Beschreibung wird die jeweilige Automatisierungshardware ausgewählt und/oder gefertigt,
e) zusammengehörige Komponenten der Automatisierungshardware werden korrespondierend zu zusammengehörigen Teilen des technischen Prozesses ausgewählt.

Ein Vorteil dieser alternativen Lösung besteht darin, dass zusammengehörige Komponenten der Automatisierungshardware korrespondierend zu zusammengehörigen Teilen des technischen Prozesses ausgewählt werden. Damit ergibt sich z. B. die Möglichkeit, eine Mehrzahl von Ausgängen zur Beeinflussung des technischen Prozesses einer einzelnen Ausgabebaugruppe mit einer entsprechenden Vielzahl von Ausgängen zuzuordnen. Die räumliche und/oder funktionale Zusammengehörigkeit z. B. solcher Ausgänge kann anhand so genannter Anlagenkennzeichen ermittelt werden, mit denen einzelne Elemente technischer Konstruktionszeichnungen üblicherweise versehen werden.

Vorteilhafte Ausgestaltungen der Erfindung sind Gegenstand der Unteransprüche.

Vorzugsweise können auch die für den oder jeden Benutzerdialog jeweils zur Auswahl vorgesehenen passenden Komponenten anhand bereits ausgewählter Komponenten der Automatisierungshardware ermittelt werden. Wenn z. B. für einen Teil des technischen Prozesses bereits eine speicherprogrammierbare Steuerung als Automatisierungshardware ausgewählt wurde, kann bei der Spezifikation weiterer Prozessperipherie in Form von z. B. Ein- oder Ausgabebaugruppen vorrangig solche Prozessperipherie zur Auswahl angeboten werden, die zum Betrieb mit der bereits ausgewählten speicherprogrammierbaren Steuerung vorgesehen oder geeignet ist.

Vorteilhaft werden die für den oder jeden Benutzerdialog jeweils zur Auswahl vorgesehenen Komponenten anhand einer Datenbasis ermittelt. Diese Datenbasis umfasst sämtliche Daten zu auswählbaren Automatisierungskomponenten. Zu jeder Komponente ist in der Datenbasis ein spezifischer Datensatz vorhanden. Gleichartige Komponenten, wie z. B. Motoren unterschiedlicher Typen, zeichnen sich durch strukturell gleichartige Datensätze aus, d. h., jeder "Motoren-Datensatz" umfasst z. B. mindestens ein Datum, das die Leistungsaufnahme des jeweiligen Motors kodiert. Wenn also der Bediener einerseits einen Motor auswählt und für diesen eine bestimmte Leistungsaufnahme vorgibt, können durch Zugriff auf die Datenbasis sämtliche Datensätze für Motoren und aus diesen genau die Datensätze, die einen Motor mit einer geeigneten Leistungsaufnahme kodieren, ausgewählt werden.

Jeder Datensatz kann darüber hinaus noch Informationen zur Kompatibilität der jeweils kodierten Komponente der Automatisierungshardware mit anderen Komponenten umfassen. Solche Daten können z. B. vorteilhaft verwendet werden, um die Auswahlmöglichkeiten auf solche Komponenten zu beschränken, die zu bereits ausgewählten Komponenten passen. Alternativ oder zusätzlich kann anhand dieser Daten z. B. am Ende der Auswahl der einzelnen Komponenten der Automatisierungshardware überprüft werden, welche Komponenten ggf. nicht für einen gemeinsamen Betrieb zur Lösung der Automatisierungsaufgabe geeignet sind. Eine Überprüfung der Kompatibilität bereits während der Eingabe kann den Nachteil haben, dass die Auswahl immer mehr eingeschränkt wird und schließlich keine Alternativen mehr angeboten werden können. Wenn die Überprüfung dagegen erst am Ende durchgeführt wird, ist im Gesamtzusammenhang ersichtlich, welche Komponenten nicht miteinander in Betrieb gesetzt werden können, so dass direkt die "Problem-Komponenten" durch geeignete Komponenten - wiederum unterstützt durch den Benutzerdialog - ausgewählt werden können.

Der Inhalt der Datenbasis ergibt sich dabei vorteilhaft auch anhand vorangehender Verwendungen des Verfahrens. Auf diese Weise "wächst" einerseits die Datenbasis kontinuierlich, indem z. B. bei jeder Verwendung des Verfahrens neue Komponenten verwendet und damit in die Datenbasis aufgenommen werden. Andererseits kann der Bediener die Datenbasis um Informationen zur Kompatibilität einzelner Komponenten untereinander ergänzen, so dass die Datenbasis auch mit dem Erfahrungsschatz des jeweiligen Bedieners wächst.

Bei einer Ausgestaltung der Erfindung wird davon ausgegangen, dass entweder die Automatisierungsaufgabe oder die Lösung der Automatisierungsaufgabe in Form des jeweiligen Steuerungsprogramms die wesentlichen Informationen zur Spezifikation der jeweils benötigten Automatisierungshardware zumindest implizit umfasst. Auch ausgehend von diesen Spezifikationen kann die Automatisierungshardware individuell ausgewählt und ggf. hergestellt werden.

Demnach ist die Beschreibung der Automatisierungslösung vorteilhaft ein Steuerprogramm zur Ansteuerung der auszuwählenden und/oder zu fertigenden Automatisierungshardware.

Wenn das Steuerprogramm zur Steuerung und/oder Überwachung des technischen Prozesses eine Anzahl von dem technischen Prozess zugeordneten Eingängen berücksichtigt sowie eine Anzahl von dem technischen Prozess zugeordneten Ausgängen beeinflusst, wobei als Elemente der Beschreibung eine sämtliche Eingänge umfassende Eingangsliste und eine sämtliche Ausgänge umfassende Ausgangsliste vorgesehen sind und wobei anhand des Umfangs von Eingangsliste Automatisierungshardware in Form von Eingabebaugruppen und anhand des Umfangs der Ausgangsliste Automatisierungshardware in Form von Ausgabebaugruppen ausgewählt und/oder gefertigt wird, wird die Prozessperipherie in Form von Ein- und Ausgabebaugruppe im exakt für den technischen Prozess passenden Umfang ausgewählt und ggf. gefertigt.

Bevorzugt wird nach Abschluss der Auswahl der Automatisierungshardware ein die ausgewählte Automatisierungshardware repräsentierender Datensatz an einen Lieferanten für Automatisierungshardware übermittelt und damit ein Angebot zu der ausgewählten Automatisierungshardware eingeholt oder direkt eine Bestellung der ausgewählten Automatisierungshardware ausgelöst. Der Bediener ist damit der Notwendigkeit enthoben, die einzelnen Komponenten etwa in einem Katalog nachschlagen und dann beim jeweiligen Hersteller eine korrespondierende Anfrage oder Bestellung aufgeben zu müssen. Mit der Auswahl stehen Informationen bezüglich des Lieferanten und die zugehörigen Bestelldaten, wie etwa eine Typen- oder Bestellnummer, zur Verfügung, weil solche Informationen insbesondere Bestandteil der in der Datenbasis gespeicherten Daten sind. Der die ausgewählte Automatisierungshardware repräsentierende Datensatz kann also direkt an einen Lieferanten für Automatisierungshardware übermittelt werden. Dieser kann anhand des übermittelten Datensatzes erkennen, welche Automatisierungskomponenten ausgewählt wurden, welche Anzahlen und ggf. welche Leistungsklassen benötigt werden.

Besonders bevorzugt können die Automatisierungshardware oder Komponenten der Automatisierungshardware gemäß der getroffenen Auswahl individuell angefertigt werden. Wenn also bei der Spezifikation einer Komponente der Automatisierungshardware, etwa einer speicherprogrammierbaren Steuerung, im Rahmen des Benutzerdialogs ein Funktionskatalog erstellt wird, der z. B. die Anzahl der Ein- und Ausgänge, die Art und Weise der kommunikativen Verbindung, wie z. B. eine Profibus-Verbindung, die Bauform und/oder Schutzart, z. B. IP65, sowie Sonderfunktionen, wie z. B. Regelfunktionen (z. B. PID-Regler), Alarmbearbeitung, Schaltuhr, etc. umfasst, kann eine diesen Spezifikationen entsprechende Automatisierungskomponente individuell gefertigt oder zusammengestellt werden.

Die Daten aus dem bei der Spezifikation der jeweiligen Komponente der Automatisierungshardware angelegten Datensatz umfassen sämtliche Informationen, um eine solche individuelle Fertigung zu ermöglichen. Die Daten können z. B. ähnlich wie in der Automobilproduktion, bei der gleichfalls eine Vielzahl von Kundenwünschen berücksichtigt werden kann und damit jedes einzelne Automobil individuell für den jeweiligen Kunden zusammengestellt ist, in die Einrichtungen zur Fertigung der Automatisierungshardware übernommen werden. Gegenüber der Automobilproduktion ergibt sich bei der Fertigung von Automatisierungshardware sogar noch der Vorteil, dass eine Vielzahl unterschiedlicher Funktionen mittels Software realisiert ist, so dass die individuelle Fertigung zumindest zum Teil in einem Transfer ausgewählter Softwarefunktionen in eine ansonsten unveränderte Automatisierungshardware besteht. Hinsichtlich der Hardware ist die individuelle Fertigung häufig dadurch erleichtert, dass einzelne Funktionen mit auch räumlich abgegrenzten oder abgrenzbaren Funktionsmodulen realisiert werden, so dass je nach Bedarf bestimmte Funktionsmodule in die Automatisierungshardware eingebracht werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: eine Übersicht über das Verfahren und
- FIG 2: eine schematische Darstellung eines Analysewerkzeugs zur Durchführung des Verfahrens.

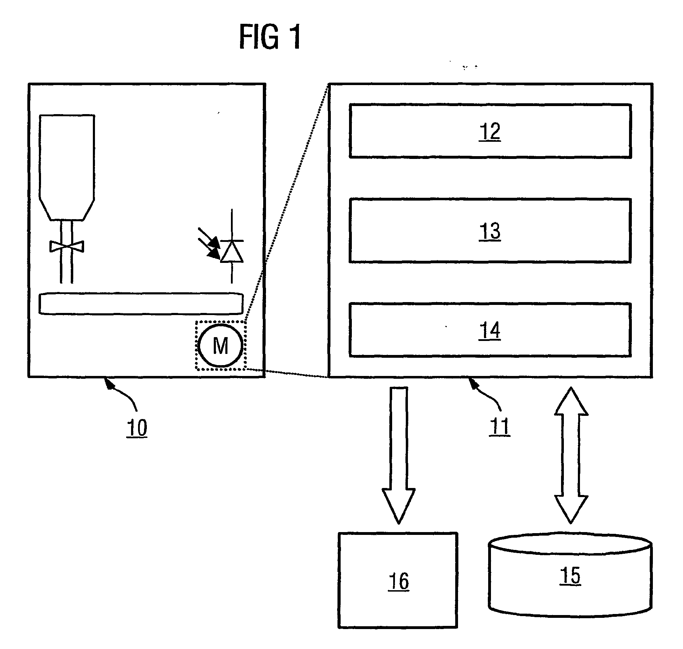

FIG 1 zeigt eine stilisierte Darstellung eines technischen Prozesses 10 in Form eines Ausschnittes einer Konstruktionszeichnung. Lediglich zur Erläuterung sei angemerkt, dass der dargestellte technische Prozess einen Reaktor umfasst, aus dem entsprechend einer Stellung eines Ventils Material abgezogen wird. Das Material gelangt auf ein durch einen Motor angetriebenes Förderband. Am Ende des Förderbandes wird mit einer Lichtschranke das Vorhandensein von Material überwacht.

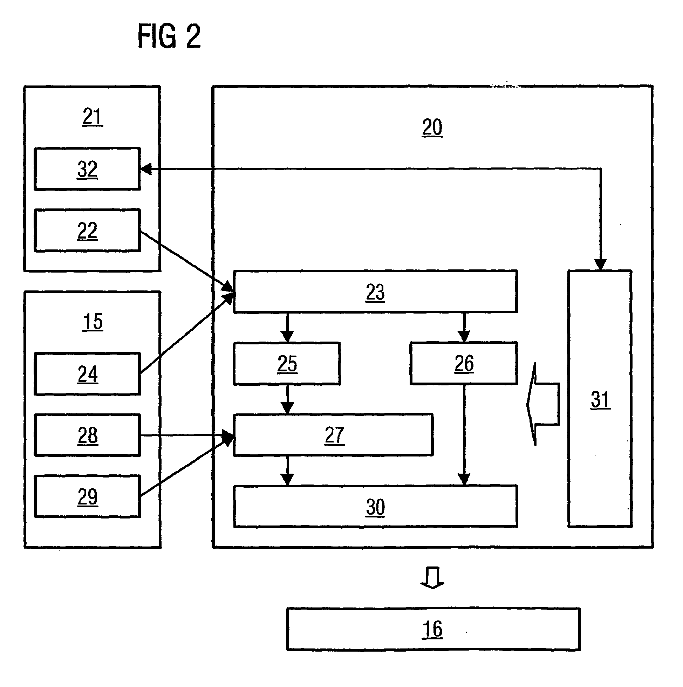

Solche oder ähnliche technische Prozesse 10 werden heute automatisch betrieben. Zum automatischen Betrieb des technischen Prozesses wird Automatisierungshardware benötigt. Zur Auswahl der jeweils benötigten Automatisierungshardware wird eine Beschreibung des technischen Prozesses 10, z. B. die Beschreibung des technischen Prozesses 10 in Form der Konstruktionszeichnung, analysiert. Die Analyse erfolgt computergestützt mit einem in FIG 1 nicht dargestellten Analysewerkzeug 20 (FIG 2). Dabei kann direkt auf die jeweiligen Daten der Konstruktionszeichnung zurückgegriffen werden, weil Konstruktionszeichnungen heute selbst üblicherweise computergestützt angefertigt werden. Bei einer Betrachtung der Daten der Konstruktionszeichnung zerfallen diese in einzelne Elemente, z. B. ein Element zur Repräsentation des Reaktors, ein Element zur Repräsentation des Ventils, ein Element zur Repräsentation des Förderbandes, usw. Zu einzelnen Elementen oder zu jedem Element der Beschreibung initiiert das Analysewerkzeug einen Dialog mit einem Benutzer - Benutzerdialog 11 - zur Spezifikation einzelner Komponenten der Automatisierungshardware. In der Darstellung gemäß FIG 1 ist der Motor des technischen Prozesses 10 zur näheren Spezifikation ausgewählt. Das Analysewerkzeug wählt sukzessive sämtliche Elemente der Beschreibung des technischen Prozesses 10 zur weiteren Spezifikation aus. Darüber hinaus kann der Bediener auch einzelne Elemente zur näheren Spezifikation gezielt auswählen und damit die vom Analysewerkzeug vorgegebene Reihenfolge der Spezifikation einzelner Elemente beeinflussen.

Der Benutzerdialog 11 umfasst einerseits eine Darstellung 12 vorhandener Daten zu dem jeweiligen Element. Vorliegend kommt z. B. in Betracht, dass die Darstellung 12 die Information umfasst, dass es sich um einen Motor handelt und dass der Motor zum Antrieb des Förderbandes vorgesehen ist. Des Weiteren umfasst der Benutzerdialog 11 eine Eingabemaske 13 zur Eingabe von spezifizierenden Parametern zu einzelnen Komponenten der Automatisierungshardware. Zur Spezifikation des Motors kommen diverse Parameter in Frage, die das Analysewerkzeug als Eingabefelder zur Verfügung stellt. Zu jeder Kategorie von Automatisierungshardware, wie einem Motor, einem Sensor oder einer speicherprogrammierbaren Steuerung, gehört ein individueller Satz von Parametern. Eine diese Parameter jeweils repräsentierende Eingabemaske 13 stellt das Analysewerkzeug in Abhängigkeit vom momentan zu spezifizierenden Element des technischen Prozesses 10 dar. Im Falle des Motors umfasst die Eingabemaske z. B. Parameter zur Leistungsaufnahme, aber auch Parameter zur Auswahl eines Gleich-, Wechsel- oder Drehstrommotors. Darüber hinaus können Parameter zur Vorgabe eines Gewichts oder räumlicher Abmessungen vorgesehen sein. Anhand dieser Parameter ermittelt das Analysewerkzeug in an sich bekannter Weise solche Automatisierungsgeräte, also z. B. geeignete Motoren, welche die vom Benutzer in der Eingabemaske 13 definierten Vorgaben erfüllen, und stellt diese in einem Auswahlbereich 14 dar. Dazu greift das Analysewerkzeug auf eine Datenbasis 15 zu. In der Datenbasis 15 sind eine Vielzahl von Daten zu Automatisierungskomponenten gespeichert. Die Datenbasis kann dabei als herstellerübergreifende Datenbasis 15 auch Automatisierungshardware unterschiedlicher Anbieter umfassen. Nachdem dem Benutzer im Auswahlbereich 14 eine Anzahl von z. B. Motoren präsentiert wird, die zu den in der Eingabemaske 13 vorgenommenen Spezifikationen passen, wählt er einen der Motoren aus. Die ausgewählte Komponente der Automatisierungshardware wird damit Bestandteil eines Datensatzes 16, der - wenn die Auswahl für sämtliche Elemente der Beschreibung durchgeführt wurde - die ausgewählte Automatisierungshardware repräsentiert. Wenn auf diese Weise die Spezifikation einer Komponente der Automatisierungshardware abgeschlossen ist, selektiert das Analysewerkzeug - oder ggf. der Bediener selbst - ein weiteres Element der Beschreibung, mit dem das Verfahren in der oben beschriebenen Art erneut durchgeführt wird.

Der die ausgewählten Komponenten der Automatisierungshardware repräsentierende Datensatz 16 kann an einen Anbieter von Automatisierungshardware übermittelt werden, um von diesem z. B. ein Angebot einzuholen. Der Datensatz 16 kann bei einem Anbieter von Automatisierungshardware auch zur individuellen Fertigung oder Konfiguration einzelner Komponenten der Automatisierungshardware gemäß der vorgegebenen Spezifikationen verwendet werden. Der Datensatz 16 kann darüber hinaus auch veröffentlicht werden, z. B. im Internet, so dass jeder interessierte Anbieter ein Angebot zu den ausgewählten Komponenten der Automatisierungshardware abgeben kann. Dazu kann im Internet ein geeignetes Forum, eine geeignete Plattform, z. B. eine "B2B-Plattform" (B2B = business to business), eingerichtet werden, deren Adresse sowohl potentiellen Kunden wie auch Anbietern von Automatisierungshardware bekannt ist. Die Anbieter von Automatisierungshardware können anhand einer solchen Plattform frühzeitig die Bedürfnisse der Kunden erkennen und darauf mit Produktinnovationen reagieren. Der Kunde kann den Anbieter mit dem attraktivsten Angebot ermitteln. Darüber hinaus erhält der Kunde eine höhere Flexibilität im Hinblick auf Verfügbarkeit, Preis, Unabhängigkeit, Lieferbedingungen, etc. bei der Bestellung.

FIG 2 zeigt eine schematische Darstellung des Analysewerkzeugs 20. Diesem werden Eingabedaten 21 zugeführt. Die Eingabedaten 21 umfassen als Planungsdaten 22 zumindest eine elektronisch lesbare Beschreibung der Automatisierungslösung in Form einer Beschreibung des jeweils zu automatisierenden technischen Prozesses 10 (FIG 1). Die Planungsdaten 22 werden in standardisierten Formaten über gleichfalls standardisierte, nicht dargestellte Schnittstellen eingelesen. Die Planungsdaten 22 können in Form von standardisierten Texten und/oder Grafik vorliegen. Sie stellen eine technologische Beschreibung des jeweiligen technischen Prozesses dar (z. B. Förderband, zu transportierendes Gewicht, Transportgeschwindigkeit, Förderbandlänge, etc.). Die Planungsdaten 22 können aus einer Simulation, CAD-Dokumenten oder Anlagenbeschreibungen erzeugt werden. Basis ist eine technologische Beschreibung einzelner Elemente des technischen Prozesses 10 und damit eine Modularisierung der Beschreibung des technischen Prozesses 10. Die einzelnen Elemente sind mit Standard-Beschreibungssprachen (textuell oder grafisch) beschrieben. Der Datentransport erfolgt mit Standardprotokollen und -formaten, wie z. B. XML.

Zum Analysieren der Beschreibung umfasst das Analysewerkzeug 20 ein Auswahlmittel 23, mit dem die oben bereits beschriebenen Schritte des Spezifizierens und Auswählens einzelner Komponenten der Automatisierungshardware durchgeführt werden. Das Auswahlmittel 23 greift dabei auf die Datenbasis 15 und darin auf eine erste Matrix 24 mit Daten zu einer Vielzahl von Automatisierungskomponenten zu. Das Auswahlmittel 23 schlägt dem jeweiligen Bediener eine Anzahl von in der ersten Matrix 24 enthaltenen Automatisierungskomponenten zur Auswahl vor. Aus diesen vorgeschlagenen Komponenten wählt der Bediener jeweils eine Komponente aus, die daraufhin in eine Komponentenliste 25 übernommen wird. Für verbleibende Elemente der Beschreibung wird entsprechend verfahren, so dass die Komponentenliste 25 schließlich sämtliche erforderliche oder geeignete Komponenten der Automatisierungshardware zur Realisierung des jeweiligen Automatisierungsvorhabens umfasst.

Aus den Elementen der Beschreibung des technischen Prozesses 10 werden durch das Auswahlmittel 23 Automatisierungsanforderungen generiert. Dazu werden die Elemente der Beschreibung an der insbesondere Katalogwissen von Automatisierungslieferanten enthaltenden ersten Matrix 24 "gespiegelt". Dazu sind die elektronischen Kataloge geeignet aufgebaut. Die Elemente der Beschreibung werden mit Systementscheidungen aus den Katalogen abgeglichen. Eine Beschreibung wie z. B. "Förderstrecke für Schüttgut n Meter Länge im Freien" führt z. B. zu einer Auswahl wie "Kleinsteuerung in IP65 mit Feldbus für die Aktor-/Sensor-Ebene". Anhand weiterer technologischer Daten (Länge, Gewicht, Geschwindigkeit, Umgebungsbedingungen) wird die Auswahl der Kleinsteuerung verfeinert. Aus der ersten Matrix 24 werden Steuerungstyp, Antriebe, Sensoren, Sicherheitseinrichtungen, etc. ausgewählt. Im Dialog können weitere Randbedingungen definiert werden, wie z. B. Vorzugslieferanten, Vorzugstypen, Besonderheiten der Anlage, etc. Entscheidend ist die Tatsache, dass das Analysewerkzeug 20 anhand der Datenbasis 15 eine Lösung vorschlägt, die ohne weitere Projektierung übernommen werden kann. Der Bediener muss damit nicht mehr die technologische Aufgabenstellung in verfügbare Automatisierungskomponenten übersetzen, da dies mittels des Analysewerkzeugs 20 erfolgt.

Anhand der Komponentenliste 25, welche die ausgewählten Komponenten der Automatisierungshardware repräsentiert, sowie anhand des Auswahlmittels 23 ergibt sich eine Liste 26 der Ein- und/oder Ausgänge zur Steuerung und/oder Überwachung des technischen Prozesses 10.

Die Komponentenliste 25 wird einem Mittel 27 zur Komplexitätsberechnung zugeführt. Dieses Mittel 27 führt eine Ermittlung der Komplexität der Automatisierungslösung in Bezug auf Abhängigkeiten einzelner Komponenten der Automatisierungshardware untereinander sowie anhand von so genannten Mengengerüsten durch. Das Mittel 27 greift auf die Datenbasis 15 und dort auf eine zweite Matrix 28 mit Daten zu Mengengerüsten, Leistungsdaten, etc. sowie eine Wissensbasis 29 mit Erfahrungsdaten aus vorangehenden Projekten zu. Für einzelne Elemente der Beschreibung des technischen Prozesses 10, insbesondere solche, die Funktionen oder Teilfunktionen technischer Prozesse repräsentieren, die häufig Verwendung finden, wie etwa eine Grenzwertüberwachung, Endabschaltung, Not-Aus-Überwachung, etc., sind vordefinierte Lösungen hinterlegt, die bei Bedarf geeignet parametriert werden.

Zur Berechnung der erforderlichen Leistungsfähigkeit der "intelligenten" Komponenten der Automatisierungshardware, also der Leistungsfähigkeit in Bezug auf Rechenleistung und Speicherkapazität z. B. speicherprogrammierbarer Steuerungen, ist die Leistungsermittlung 30 vorgesehen. Die Berechnung der erforderlichen Leistungsfähigkeit erfolgt dabei anhand der ausgewählten Komponenten, also anhand der Komponentenliste 25, sowie anhand der vom Mittel 27 zur Komplexitätsberechnung ermittelten Komplexität der Automatisierungslösung.

Damit kann abschließend für die ausgewählten Komponenten der Automatisierungshardware z. B. die Leistungsfähigkeit einer Zentraleinheit einer speicherprogrammierbaren Steuerung sowie Art und Granularität der Ein- und Ausgänge bestimmt werden. Art und Granularität der Ein- und Ausgänge ergibt sich dabei speziell anhand der Liste 26 der Ein- und Ausgänge.

Jeder Verfahrensschritt und jede Maßnahme des Analysewerkzeugs 20 kann dabei durch einen Abfragedialog 31 und diesbezügliche Benutzereingaben 32 ergänzt werden. Zunächst stellt das Analysewerkzeug 20 die jeweils vorhandenen Daten dar, so dass sich der Bediener bei der zu treffenden Auswahl oder zur Konkretisierung bereits vorliegender Spezifikationen daran orientieren kann; dies erfolgt mittels der Darstellung 12 (FIG 1). Ferner schlägt das Analysewerkzeug 20 zu jeder technologischen Aufgabe eine aus seiner Datenbasis 15 (Kataloge, Expertenwissen, Musterlösungen, etc.) abgeleitete Lösung vor; dies erfolgt im Auswahlbereich 14 (FIG 1). Zusätzliche oder fehlende Informationen oder Lösungsalternativen werden im Rahmen des Abfragedialogs 31 vom Bediener ergänzt; dies entspricht der Eingabe von spezifizierenden Parametern in der Eingabemaske 13 (FIG 1). Das Analysewerkzeug 20 kann eine Benutzereingabe 32 fordern, wenn Daten fehlen oder wenn aus der Berechnung gleichwertige Alternativen entstehen; auch dies erfolgt in der Eingabemaske 13.

Die Dialoge 31 sind mit den technologischen Komponenten und den in der Datenbasis 15 vorhandenen Musterlösungen korreliert, so dass z. B. mit den das Förderband repräsentierenden Daten unmittelbar Dialoge 31 für weitere Abfragen, z. B. hinsichtlich der einzusetzenden Motoren, verbunden sind.

Das Analysewerkzeug 20 passt diese Dialoge 31 dynamisch an den aktuellen Wissensstand der Analyse an. D. h., sie sind abhängig von der zuvor getätigten Auswahl sowie von den zuvor generierten Ergebnissen. Weitere Ergänzungen können aus den eingelesenen Daten der technologischen Anlagenbeschreibung ermittelt werden, z. B. Kommunikationsanschluss an das Unternehmensnetz, Mengenerfassung der über das Förderband transportierten Güter für das MES-/ERP-System, etc.

Aus allen ermittelten Daten wird dann der Datensatz 16 abgeleitet. Dieser kann zum Einholen von Angeboten an Lieferanten von Komponenten von Automatisierungshardware übermittelt werden. Der Datensatz - oder ggf. signifikante Teile desselben - kann auf Seiten des Lieferanten auch zur Produktionssteuerung verwendet werden, so dass eine individuelle, kundenspezifische Fertigung einzelner oder aller Automatisierungskomponenten möglich wird.

Damit lässt sich die Erfindung kurz wie folgt darstellen: Es wird ein Verfahren zur Auswahl und/oder Fertigung von Automatisierungshardware, wie sie zur Steuerung und/oder Überwachung eines zu automatisierenden technischen Prozesses entsprechend einer Automatisierungslösung geeignet oder erforderlich ist, angegeben, bei dem zunächst eine Beschreibung der Automatisierungslösung erstellt und diese Beschreibung analysiert und schließlich entsprechend der Analyse der Beschreibung die jeweilige Automatisierungshardware ausgewählt und ggf. gefertigt wird.

## Patentansprüche

1. Verfahren zur Auswahl und/oder Fertigung von Automatisierungshardware, wie sie zur Steuerung und/oder Überwachung eines zu automatisierenden technischen Prozesses (10) entsprechend einer Automatisierungslösung geeignet oder erforderlich ist, mit folgenden Schritten:
a) es wird eine elektronisch lesbare Beschreibung der Automatisierungslösung erstellt, wobei die Beschreibung der Automatisierungslösung eine technologische Beschreibung wie eine Konstruktionszeichnung ist, die zumindest Teile des technischen Prozesses (10) und diesen jeweils zugeordnet Komponenten der auszuwählenden und/oder zu fertigenden Automatisierungshardware umfasst,
b) die Beschreibung wird mittels eines computergestützten Analysewerkzeugs (20) analysiert,
c) das Analysewerkzeug (20) initiiert zu einzelnen Elementen der Beschreibung einen Dialog mit einem Benutzer - Benutzerdialog (11) - zur Spezifikation einzelner Komponenten der Automatisierungshardware, wobei der Benutzerdialog (11) eine Eingabe von spezifizierenden Parametern zu einzelnen Komponenten der Automatisierungshardware umfasst und wobei der oder jeder Benutzerdialog (11) eine Anzahl passender Komponenten der Automatisierungshardware zur Auswahl durch den Benutzer umfasst,
d) entsprechend der Analyse der Beschreibung wird die jeweilige Automatisierungshardware ausgewählt und/oder gefertigt,
e) für den oder jeden Benutzerdialog (11) werden die jeweils zur Auswahl vorgesehenen passenden Komponenten anhand der zugehörigen Teile des technischen Prozesses (10) ermittelt.

2. Verfahren nach Anspruch 1, wobei für den oder jeden Benutzerdialog (11) die jeweils zur Auswahl vorgesehenen passenden Komponenten anhand bereits ausgewählter Komponenten der Automatisierungshardware ermittelt werden.

3. Verfahren zur Auswahl und/oder Fertigung von Automatisierungshardware, wie sie zur Steuerung und/oder Überwachung eines zu automatisierenden technischen Prozesses (10) entsprechend einer Automatisierungslösung geeignet oder erforderlich ist, mit folgenden Schritten:
a) es wird eine elektronisch lesbare Beschreibung der Automatisierungslösung erstellt, wobei die Beschreibung der Automatisierungslösung eine technologische Beschreibung wie eine Konstruktionszeichnung ist, die zumindest Teile des technischen Prozesses (10) und diesen jeweils zugeordnet Komponenten der auszuwählenden und/oder zu fertigenden Automatisierungshardware umfasst,
b) die Beschreibung wird mittels eines computergestützten Analysewerkzeugs (20) analysiert,
c) das Analysewerkzeug (20) initiiert zu einzelnen Elementen der Beschreibung einen Dialog mit einem Benutzer - Benutzerdialog (11) - zur Spezifikation einzelner Komponenten der Automatisierungshardware, wobei der Benutzerdialog (11) eine Eingabe von spezifizierenden Parametern zu einzelnen Komponenten der Automatisierungshardware umfasst und wobei der oder jeder Benutzerdialog (11) eine Anzahl passender Komponenten der Automatisierungshardware zur Auswahl durch den Benutzer umfasst,
d) entsprechend der Analyse der Beschreibung wird die jeweilige Automatisierungshardware ausgewählt und/oder gefertigt,
e) zusammengehörige Komponenten der Automatisierungshardware werden korrespondierend zu zusammengehörigen Teilen des technischen Prozesses (10) ausgewählt.

4. Verfahren nach einem der vorangehenden Ansprüche, wobei für den oder jeden Benutzerdialog (11) die jeweils zur Auswahl vorgesehenen Komponenten anhand einer Datenbasis (15) ermittelt werden.

5. Verfahren nach Anspruch 4, wobei der Inhalt der Datenbasis (15) sich anhand vorangehender Verwendungen des Verfahrens ergibt.

6. Verfahren nach Anspruch 1, wobei die Beschreibung der Automatisierungslösung ein Steuerprogramm zur Ansteuerung der auszuwählenden und/oder zu fertigenden Automatisierungshardware ist.

7. Verfahren nach Anspruch 6, wobei das Steuerprogramm zur Steuerung und/oder Überwachung des technischen Prozesses (10) eine Anzahl von dem technischen Prozess (10) zugeordneten Eingängen berücksichtigt sowie eine Anzahl von dem technischen Prozess (10) zugeordneten Ausgängen beeinflusst, wobei als Elemente der Beschreibung eine sämtliche Eingänge umfassende Eingangsliste und eine sämtliche Ausgänge umfassende Ausgangsliste vorgesehen sind und wobei anhand des Umfangs der Eingangsliste Automatisierungshardware in Form von Eingabebaugruppen und anhand des Umfangs der Ausgangsliste Automatisierungshardware in Form von Ausgabebaugruppen ausgewählt und/oder gefertigt wird.

8. Verfahren nach einem oder mehreren der vorangehenden Ansprüche, wobei nach Abschluss der Auswahl der Automatisierungshardware ein die ausgewählte Automatisierungshardware repräsentierender Datensatz (16) an einen Lieferanten für Automatisierungshardware übermittelt und damit ein Angebot zu der ausgewählten Automatisierungshardware eingeholt oder eine Bestellung der ausgewählten Automatisierungshardware ausgelöst wird.

9. Verfahren nach Anspruch 8, wobei die Automatisierungshardware oder Komponenten der Automatisierungshardware gemäß der getroffenen Auswahl individuell angefertigt werden.

10. Verfahren nach Anspruch 9, wobei der die ausgewählte Automatisierungshardware repräsentierende Datensatz (16) beim Lieferanten für Automatisierungshardware zur individuellen Fertigung einzelner Komponenten der Automatisierungshardware ausgewertet wird.

## Claims

1. Method for selecting and/or manufacturing automation hardware that is suitable or necessary for controlling and/or monitoring a technical process (10) to be automated according to an automation solution, said method comprising the following steps:
a) an electronically readable description of the automation solution is produced, the description of the automation solution being a technological description such as an engineering drawing which includes at least parts of the technical process (10) and components, assigned to these in each case, of the automation hardware to be selected and/or manufactured,
b) the description is analysed using a computer-aided analytical tool (20),
c) in respect of individual elements of the description, the analytical tool (20) initiates a dialogue with a user - user dialogue (11) - for the purpose of specifying individual components of the automation hardware, the user dialogue (11) including an input of specifying parameters relating to individual automation hardware components and the or each user dialogue (11) including a number of appropriate automation hardware components for selection by the user,
d) based on the analysis of the description, the respective automation hardware is selected and/or manufactured,
e) for the or each user dialogue (11), the appropriate components provided for selection in each case are determined on the basis of the associated parts of the technical process (10).

2. Method according to claim 1, wherein for the or each user dialogue (11), the appropriate components provided for selection in each case are determined on the basis of already selected automation hardware components.

3. Method for selecting and/or manufacturing automation hardware that is suitable or necessary for controlling and/or monitoring a technical process (10) to be automated according to an automation solution, said method comprising the following steps:
a) an electronically readable description of the automation solution is produced, the description of the automation solution being a technological description such as an engineering drawing which includes at least parts of the technical process (10) and components, assigned to these in each case, of the automation hardware to be selected and/or manufactured,
b) the description is analysed using a computer-aided analytical tool (20),
c) in respect of individual elements of the description, the analytical tool (20) initiates a dialogue with a user - user dialogue (11) - for the purpose of specifying individual components of the automation hardware, the user dialogue (11) including an input of specifying parameters relating to individual automation hardware components and the or each user dialogue (11) including a number of appropriate automation hardware components for selection by the user,
d) based on the analysis of the description, the respective automation hardware is selected and/or manufactured,
e) related automation hardware components are selected corresponding to related parts of the technical process (10).

4. Method according to one of the preceding claims, wherein the components provided for selection in each case for the or each user dialogue (11) are determined with the aid of a database.

5. Method according to claim 4, wherein the contents of the database (15) are produced on the basis of previous uses of the method.

6. Method according to claim 1, wherein the description of the automation solution is a control program for controlling the automation hardware that is to be selected and/or manufactured.

7. Method according to claim 6, wherein the control program for controlling and/or monitoring the technical process (10) takes into account a number of inputs assigned to the technical process and influences a number of outputs assigned to the technical process (10), with an input list including all inputs and an output list including all outputs being provided as elements of the description, and with automation hardware in the form of input modules and automation hardware in the form of output modules being selected and/or manufactured based on the scope of the input list and the scope of the output list respectively.

8. Method according to one or more of the preceding claims, wherein after the selection of the automation hardware has been completed, a data record (16) representing the selected automation hardware is transmitted to an automation hardware supplier and a quotation relating to the selected automation hardware is thereby obtained or an order for the selected automation hardware is initiated.

9. Method according to claim 8, wherein the automation hardware or components of the automation hardware are custom-manufactured in accordance with the selection made.

10. Method according to claim 9, wherein the data record (16) representing the selected automation hardware is evaluated by the automation hardware supplier for the purpose of custom-manufacturing individual components of the automation hardware.

## Revendications

1. Procédé pour sélectionner et/ou fabriquer du matériel d'automatisation, tel celui approprié ou nécessaire pour la commande et/ou le contrôle d'un processus technique à automatiser (10) conformément à une solution d'automatisation, ayant des étapes suivantes :
a) on élabore une description lisible électroniquement de la solution d'automatisation, la description de la solution d'automatisation étant une description technologique telle qu'un dessin de construction, qui comprend au moins des parties du processus technique (10) et des composants, respectivement associés à celles-ci, du matériel d'automatisation à sélectionner et/ou à fabriquer,
b) on analyse la description au moyen d'un outil d'analyse assisté par ordinateur (20),
c) l'outil d'analyse (20) déclenche pour différents éléments de la description un dialogue avec un utilisateur - dialogue d'utilisateur (11) - pour la spécification de composants individuels du matériel d'automatisation, le dialogue d'utilisateur (11) comprenant une entrée de paramètres de spécification pour différents composants du matériel d'automatisation et le ou chaque dialogue d'utilisateur (11) comprenant un certain nombre de composants adaptés du matériel d'automatisation en vue de la sélection par l'utilisateur,
d) en fonction de l'analyse de la description, on sélectionne et/ou fabrique le matériel d'automatisation respectif,
e) pour le ou chaque dialogue d'utilisateur (11), on détermine les composants respectivement adaptés prévus pour la sélection à l'aide des parties associées du processus technique (10).

2. Procédé selon la revendication 1, dans lequel, pour le ou chaque dialogue d'utilisateur (11), on détermine les composants respectivement adaptés prévus pour la sélection à l'aide de composants déjà sélectionnés du matériel d'automatisation.

3. Procédé pour sélectionner et/ou fabriquer du matériel d'automatisation, tel celui approprié ou nécessaire pour la commande et/ou le contrôle d'un processus technique à automatiser (10) conformément à une solution d'automatisation, ayant des étapes suivantes :
a) on élabore une description lisible électroniquement de la solution d'automatisation, la description de la solution d'automatisation étant une description technologique telle qu'un dessin de construction, qui comprend au moins des parties du processus technique (10) et des composants, respectivement associés à celles-ci, du matériel d'automatisation à sélectionner et/ou à fabriquer,
b) on analyse la description au moyen d'un outil d'analyse assisté par ordinateur (20),
c) l'outil d'analyse (20) déclenche pour différents éléments de la description un dialogue avec un utilisateur - dialogue d'utilisateur (11) - pour la spécification de composants individuels du matériel d'automatisation, le dialogue d'utilisateur (11) comprenant une entrée de paramètres de spécification pour différents composants du matériel d'automatisation et le ou chaque dialogue d'utilisateur (11) comprenant un certain nombre de composants adaptés du matériel d'automatisation en vue de la sélection par l'utilisateur,
d) en fonction de l'analyse de la description, on sélectionne et/ou fabrique le matériel d'automatisation respectif,
e) on sélectionne des composants liés les uns aux autres du matériel d'automatisation en correspondance avec des parties liées les unes aux autres du processus technique (10).

4. Procédé selon l'une des revendications précédentes, dans lequel, pour le ou chaque dialogue d'utilisateur (11), on détermine les composants respectivement prévus pour la sélection à l'aide d'une base de données (15).

5. Procédé selon la revendication 4, dans lequel le contenu de la base de données (15) se déduit des utilisations antérieures du procédé.

6. Procédé selon la revendication 1, dans lequel la description de la solution d'automatisation est un programme de commande pour la commande du matériel d'automatisation à sélectionner et/ou à fabriquer.

7. Procédé selon la revendication 6, dans lequel le programme de commande pour la commande et/ou le contrôle du processus technique (10) prend en compte un certain nombre d'entrées associées au processus technique (10) et influence un certain nombre de sorties associées au processus technique (10), dans lequel une liste d'entrées comprenant toutes les entrées et une liste de sortie comprenant toutes les sorties sont prévues comme éléments de la description et dans lequel on sélectionne et/ou fabrique du matériel d'automatisation sous la forme de modules d'entrée à l'aide de l'ensemble de la liste d'entrée et du matériel d'automatisation sous la forme de modules de sortie à l'aide de l'ensemble de la liste de sortie.

8. Procédé selon l'une ou plusieurs des revendications précédentes, dans lequel, après la fin de la sélection du matériel d'automatisation, on transmet un ensemble de données (16) représentant le matériel d'automatisation sélectionné à un fournisseur de matériels d'automatisation et on reçoit alors une offre pour le matériel d'automatisation sélectionné ou on déclenche une commande du matériel d'automatisation sélectionné.

9. Procédé selon la revendication 8, dans lequel on fabrique individuellement le matériel d'automatisation ou des composants du matériel d'automatisation selon la sélection réalisée.

10. Procédé selon la revendication 9, dans lequel on exploite l'ensemble de données (16) représentant le matériel d'automatisation sélectionné chez le fournisseur de matériels d'automatisation en vue de la fabrication individuelle de certains composants du matériel d'automatisation.
